(19) Europäisches Patentamt
European Patent Office
Office européen des brevets

(11) **EP 3 693 185 B1**

(12) **EUROPEAN PATENT SPECIFICATION**

(45) Date of publication and mention
of the grant of the patent:
**14.08.2024 Bulletin 2024/33**

(21) Application number: **20150767.0**

(22) Date of filing: **08.01.2020**

(51) International Patent Classification (IPC):
**B60C 1/00** *(2006.01)* **C08L 7/00** *(2006.01)*
**C08L 9/06** *(2006.01)* **C08L 9/00** *(2006.01)*
**C08K 3/04** *(2006.01)* **C08K 3/36** *(2006.01)*

(52) Cooperative Patent Classification (CPC):
(C-Sets available)
**B60C 11/0332; B60C 1/0016; C08L 7/00;**
**C08L 9/06;** B60C 2011/0025; Y02T 10/86 (Cont.)

(54) **TREAD RUBBER COMPOSITION AND TIRE**

LAUFFLÄCHENKAUTSCHUKZUSAMMENSETZUNG UND REIFEN

COMPOSITION DE BANDE DE ROULEMENT EN CAOUTCHOUC ET PNEUMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **07.02.2019 JP 2019021036**

(43) Date of publication of application:
**12.08.2020 Bulletin 2020/33**

(73) Proprietor: **Sumitomo Rubber Industries, Ltd.**
**Kobe-shi, Hyogo-ken 651-0072 (JP)**

(72) Inventor: **HABA, Toshifumi**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 730 433**     **WO-A1-2018/097066**
**US-B2- 7 980 279**

(52) Cooperative Patent Classification (CPC): (Cont.)

C-Sets
**C08L 7/00, C08L 9/06, C08L 9/00, C08L 91/06,
C08K 3/04, C08K 3/36, C08K 5/09, C08K 3/22,
C08K 3/06, C08K 5/18, C08K 5/3437, C08K 5/47;
C08L 7/00, C08L 9/06, C08L 9/00, C08L 91/06,
C08K 3/04, C08K 5/09, C08K 3/22, C08K 3/06,
C08K 5/18, C08K 5/3437, C08K 5/47;
C08L 9/06, C08L 7/00, C08L 9/00, C08L 91/06,
C08K 3/04, C08K 5/09, C08K 3/22, C08K 3/06,
C08K 5/18, C08K 5/3437, C08K 5/47**

**Description**

BACKGROUND OF THE INVENTION

Field of the Invention

The present invention relates to a tread rubber composition and a tire having a tread formed from the rubber composition.

Description of the Background Art

Tread rubbers of the tires of trucks running on bad roads suffer, for example, detriment in which cracks generated in the treads are enlarged so as to chip small pieces off the treads (chip-cut). Thus, durability against chip-cut (chipping resistance) needs to be ensured. To this end, natural rubber and styrene-butadiene rubber having excellent chipping resistance have been used as rubber components of tread rubbers, and reinforcing agents such as carbon black and silica having high reinforcement performance have been blended.

Moreover, wear resistance has also been required as the durability of tires, and, for example, tires for all seasons used mainly for running on good roads have experienced improvements in wear resistance by blending therein butadiene rubber. However, if butadiene rubber is blended in tread rubber, chipping resistance deteriorates although wear resistance tends to be improved. Therefore, there is a problem in that it is difficult to attain both of these resistances.

Although Japanese Laid-Open Patent Publication No. 2014-024890 describes a tread rubber composition that contains crystallized carbon black obtained by crystallization and thus has improved wear resistance and resistance to block chipping, there is still room for improvement in attaining both of these resistances.

Further examples of rubber compositions which can be used for a tread of trucks, buses or heavy-load tires can be found in WO 2018/097066 A1 & EP 3 546 512 A1, US 7 980 279 B2 as well as EP 2 730 433 A1.

SUMMARY OF THE INVENTION

An object of the present invention is to provide a heavy-duty tire that exhibits favorable wear resistance and chipping resistance particularly during running on a bad road surface (unpaved rough road surface).

The present inventor has found as a result of thorough study that a heavy-duty tire has favorable wear resistance, uneven wear resistance, and chipping resistance if the tread thereof is formed from a rubber composition containing predetermined amounts of an isoprene-based rubber, a butadiene rubber, a styrene-butadiene rubber, and a carbon black having a predetermined nitrogen adsorption specific surface area, and the ground-contact surface shape of the tire satisfies predetermined requirements. Accordingly, the present inventor has completed the present invention.

Specifically, the present invention is directed to:

[1] a heavy-duty tire comprising a tread formed from a rubber composition containing a rubber component that includes 25 to 70% by mass of an isoprene-based rubber, 10 to 30% by mass of a butadiene rubber, and 20 to 55% by mass of a styrene-butadiene rubber, the rubber composition further containing, per 100 parts by mass of the rubber component, 10 to 70 parts by mass of a carbon black having a nitrogen adsorption specific surface area not less than 135 m$^2$/g, wherein

a ground-contact surface shape formed when the tread is pressed against a flat surface by application of a normal load in a normal state where the heavy-duty tire is mounted to a normal rim and inflated to a normal internal pressure and no load is applied to the heavy-duty tire, satisfies formulae (1) and (2):

$$1.05 \leq SL0/SL70 \leq 1.15 \quad (1)$$

$$0.95 \leq SL70/SL97 \leq 1.05 \quad (2),$$

where
SL0 represents a ground-contact length in a tire circumferential direction on a tire equator, SL70 represents a ground-contact length in the tire circumferential direction at a position that is apart from the tire equator in a tire axial direction by a distance that is 70% of a half ground-contact width of the tread, and SL97 represents a ground-contact length in the tire circumferential direction at a position that is apart from the tire equator in the tire axial direction by a distance that is 97% of the half ground-contact width of the tread;

[2] the heavy-duty tire according to [1], wherein the rubber composition has a complex elastic modulus E* at 70°C not less than 6.2;

[3] the heavy-duty tire according to [1] or [2], wherein the rubber composition has a tanδ at 70°C not greater than 0.13;

[4] the heavy-duty tire according to any one of [1] to [3], wherein an amount of a silica contained in the rubber composition per 100 parts by mass of the rubber component is not less than 0 parts by mass and not greater than 10 parts by mass;

[5] the heavy-duty tire according to any one of [1] to [4], wherein the styrene-butadiene rubber has a styrene content of 5 to 25% by mass, a vinyl content of 10 to 45% by mol, and a weight-average molecular weight not less than 200 thousand; and

[6] the heavy-duty tire according to any one of [1] to [5], wherein the butadiene rubber has a cis content not less than 90% and a weight-average molecular weight not less than 400 thousand.

With the feature in the above-described [1], since the styrene-butadiene rubber (SBR) is contained, dispersion of the fine carbon particles that are not easily dispersed in the butadiene rubber (BR) is facilitated, and the reinforcing effect of the carbon black is exhibited, whereby wear resistance during running on a bad road is improved. In addition, since the ground-contact surface shape is adjusted, uneven wear can be suppressed.

With the feature in the above-described [2], deformation due to foreign objects from outside such as stones or the like on a bad road decreases, and cracks are less likely to be generated. Therefore, this feature is advantageous to reduction of chipping and wear.

With the feature in the above-described [3], deterioration of the wear resistance by the tread being softened owing to heat generation can be inhibited.

With the feature in the above-described [4], since the amount of the silica blended is made small, the amount of an aggregate, of the silica, that is to become a fracture origin decreases, whereby the wear resistance is improved.

With the feature in the above-described [5], the compatibility between the SBR and the BR is improved, and the carbon black which is present in the SBR phase is distributed also into the BR phase, whereby the rubber strength of the BR phase is improved, and the wear resistance is improved.

With the feature in the above-described [6], since BR having a higher cis content allows polymer chains to be more orderly arrayed, interaction between the polymers is intensified and the rubber strength is improved, whereby the wear resistance is improved.

Accordingly, the present invention can provide a heavy-duty tire that exhibits improved combined performance of wear resistance, uneven wear resistance, and chipping resistance particularly during running on a bad road surface (unpaved rough road surface).

BRIEF DESCRIPTION OF THE DRAWINGS

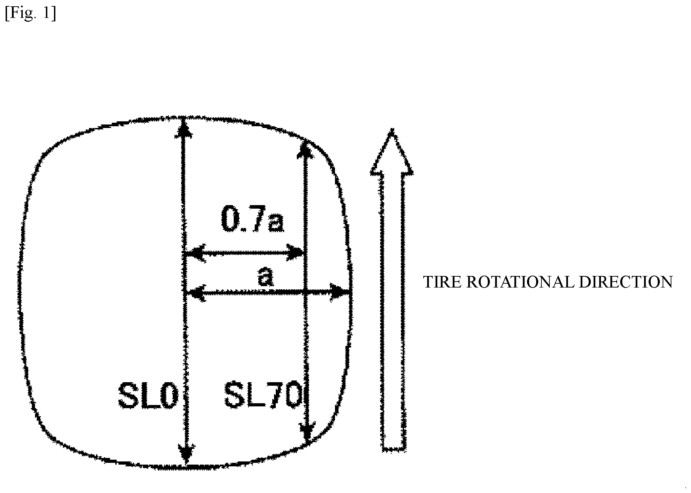

FIG. 1 is a schematic diagram of the ground-contact surface shape formed when a tread is pressed against a flat surface.

DESCRIPTION OF THE PREFERRED EMBODIMENTS

A heavy-duty tire according to an embodiment of the present invention is a heavy-duty tire having a tread formed from a rubber composition containing predetermined amounts of an isoprene-based rubber, a butadiene rubber, a styrene-butadiene rubber, and a carbon black having a predetermined nitrogen adsorption specific surface area, and the ground-contact surface shape of the tire satisfies predetermined requirements. In the present specification, each of numerical ranges indicated with "to" is inclusive of both numerical limits thereof.

<Ground-Contact Surface Shape>

FIG. 1 shows the ground-contact surface shape (FP: footprint) formed when the tread is pressed against a flat surface. Here, in the ground-contact surface shape FP in FIG. 1, SL0 represents a ground-contact length in a tire circumferential direction (tire rotational direction) on a tire equator. In the ground-contact surface shape in FIG. 1, SL70 represents a ground-contact length in the tire circumferential direction at a position that is apart from the tire equator in a tire axial direction by a distance that is 70% of a half ground-contact width (a) of the tread (0.7a). In the ground-contact surface shape, SL97 (not shown) represents a ground-contact length in the tire circumferential direction at a position that is apart from the tire equator in the tire axial direction by a distance that is 97% of the half ground-contact width (a) of the tread (0.97a). The "half ground-contact width of the tread" refers to a width that is half the distance in the tire axial direction between the ground-contact edges at the outermost sides in the tire axial direction of a ground-contact surface.

In the tire according to the present embodiment, the ground-contact surface shape formed when the tread is pressed against a flat surface by application of a normal load in a normal state where the tire is mounted to a normal rim and inflated to a normal internal pressure and no load is applied to the tire, satisfies relationships expressed by the following formulae (1) and (2):

$$1.05 \leq SL0/SL70 \leq 1.15 \qquad (1)$$

$$0.95 \leq SL70/SL97 \leq 1.05 \qquad (2).$$

If the ground-contact surface shape is thus adjusted, uneven wear can be suppressed, and early removal of the tire due to occurrence of uneven wear can be avoided, and thus wear resistance which is intrinsic to a rubber composition described later can be sufficiently exhibited. In addition, the amount of change in the ground-contact surface shape is small in each of a low-load range and a high-load range, and thus the tire has low selectivity in road surfaces and exhibits high wear resistance in a wide range of road surface environments.

The lower limit for SL0/SL70 is preferably 1.06 and more preferably 1.07. Meanwhile, the upper limit therefor is preferably 1.14 and more preferably 1.13. If SL0/SL70 is less than 1.05, wear tends to easily occur unevenly. Meanwhile, if SL0/SL70 is greater than 1.15, wear tends to easily occur at a center portion of the tire.

The lower limit for SL70/SL97 is preferably 0.96 and more preferably 0.97. Meanwhile, the upper limit therefor is preferably 1.04 and more preferably 1.03. If SL70/SL97 is less than 0.95, wear tends to easily occur unevenly. Meanwhile, if SL70/SL97 is greater than 1.05, uneven wear tends to easily occur in a shoulder portion.

The "normal rim" refers to a rim defined, in a standard system including a standard on which the tire is based, by the standard for each tire, and is, for example, the standard rim in the JATMA standard, the "Design Rim" in the TRA standard, or the "Measuring Rim" in the ETRTO standard.

The "normal internal pressure" refers to an air pressure defined by the aforementioned standard for each tire, and is the maximum air pressure in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" refers to a load defined by the aforementioned standard for each tire, and is the maximum load capacity in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The aforementioned ground-contact surface shape can be formed by adjusting, as appropriate, factors such as the profile of a mold, a gauge distribution, and a structure. However, the factors are not particularly limited as long as the aforementioned ground-contact surface shape is formed. For example, the indexes (SL0/SL70 and SL70/SL97) of the ground-contact surface shape can be set to desired values by adjusting the thicknesses of a center portion of the tread and/or shoulder portions of the tread, or by adjusting the gauge distribution of the tread. Specifically, if the thickness of the center portion of the tread is made small, the indexes of the ground-contact surface shape can be adjusted to large values, whereas, if the thicknesses of the shoulder portions of the tread are made large, the indexes of the ground-contact surface shape can be adjusted to small values.

<Rubber Component>

In a tread rubber composition according to the present embodiment, a styrene-butadiene rubber (SBR) is dispersed in an isoprene polymer and a butadiene polymer, and thus an impact that occurs during running on a bad road surface is mitigated. Furthermore, the tread rubber composition contains a predetermined amount of small carbon black particles having a nitrogen adsorption specific surface area not less than 130 $m^2/g$, and thus the small carbon black particles are dispersed to near the boundaries of the respective phases of the isoprene-based rubber, the BR, and the SBR so that the area of contact between the SBR and the carbon black increases. Accordingly, bonds between the respective phases of the isoprene-based rubber, the BR, and the SBR become strong, and thus it is possible to obtain a rubber composition that allows more effective absorption of an impact that occurs during running on a bad road surface. In addition, it is considered that use of the small carbon black particles allows improvement in the reinforcing effect for the rubber composition, thereby improving wear resistance and chipping resistance.

As a rubber component used in the present embodiment, a styrene-butadiene rubber (SBR), an isoprene-based rubber, and a butadiene rubber (BR) are suitably used.

(Isoprene-Based Rubber)

As the isoprene-based rubber, for example, isoprene-based rubbers that are generally used in the tire industry such as isoprene rubber (IR) and natural rubber can be used. Examples of the natural rubber include not only non-reformed natural rubber (NR) but also reformed natural rubbers such as epoxidized natural rubber (ENR), hydrogenated natural rubber (HNR), deproteinized natural rubber (DPNR), ultra-pure natural rubber (UPNR), and grafted natural rubber. These rubbers may be used singly, or two or more of these rubbers may be used in combination.

The NR is not particularly limited, and NRs that are generally used in the tire industry can be used. Examples of such NRs include SIR20, RSS#3, and TSR20.

The amount of the isoprene-based rubber contained in the rubber component is not less than 25% by mass, preferably not less than 27% by mass, and more preferably not less than 30% by mass. If the amount is less than 25% by mass, the aforementioned advantageous effects of the present invention tend to be insufficient. Meanwhile, the amount of the isoprene-based rubber contained is not greater than 70% by mass, preferably not greater than 68% by mass, and more preferably not greater than 65% by mass. If the amount is greater than 70% by mass, crack growth resistance tends to decrease.

(BR)

The BR is not particularly limited, and BRs that are generally used in the tire industry can be used. Examples of such BRs include BRs having a cis-1,4 bond content less than 50% (low-cis BRs), BRs having a cis-1,4 bond content not less than 90% (high-cis BRs), rare earth-based butadiene rubbers synthesized using a rare earth element-based catalyst (rare earth-based BRs), BRs containing syndiotactic polybutadiene crystal (SPB-containing BRs), and modified BRs (high-cis modified BRs and low-cis modified BRs). Among these BRs, high-cis BRs are preferable because of excellent wear resistance.

Examples of the high-cis BRs include BR1220 manufactured by Zeon Corporation, BR130B, BR150B, and BR150L manufactured by Ube Industries, Ltd., and BR730 manufactured by JSR Corporation. If such a high-cis BR is contained, low-temperature characteristics and wear resistance can be improved. Examples of the rare earth-based BRs include BUNA-CB25 manufactured by LANXESS.

Examples of the SPB-containing BRs do not include SPB-containing BRs obtained by 1,2-syndiotactic polybutadiene crystal being merely dispersed in BR, but include SPB-containing BRs obtained by 1,2-syndiotactic polybutadiene crystal being dispersed in a state of being chemically bound to BR. Examples of such SPB-containing BRs include VCR-303, VCR-412, and VCR-617 manufactured by Ube Industries, Ltd.

Examples of the modified BRs include modified BRs that are obtained by polymerizing 1,3-butadiene with a lithium initiator and then adding a tin compound to the polymerized 1,3-butadiene, and in which the ends of the modified BR molecules are bound to each other through tin-carbon bonds (tin-modified BRs), and butadiene rubbers having a condensed alkoxysilane compound at an active end thereof (modified BRs for silica). Examples of such modified BRs include BR1250H (tin-modified BR) manufactured by Zeon Corporation, and an S-modified polymer (modified BR for silica) manufactured by Sumitomo Chemical Co., Ltd.

The amount of the BR contained in the rubber component is not less than 10% by mass, preferably not less than 12% by mass, and more preferably not less than 14% by mass. If the amount is less than 10% by mass, the aforementioned advantageous effects of the present invention tend to be insufficient. Meanwhile, the amount of the BR contained is not greater than 30% by mass, preferably not greater than 27% by mass, and more preferably not greater than 24% by mass. If the amount is greater than 30% by mass, the chipping resistance deteriorates, whereby block chipping tends to easily occur.

The cis-1,4 bond content (cis content) of the BR is preferably not less than 90%, more preferably not less than 93%, and further preferably not less than 95% from the viewpoints of durability and wear resistance. It is considered that, since a higher cis content allows polymer chains to be more orderly arrayed, interaction between the polymers is intensified and the rubber strength is improved, whereby the wear resistance during running on a bad road is improved.

The weight-average molecular weight (Mw) of the BR is preferably not less than 400 thousand, more preferably not less than 450 thousand, and further preferably not less than 500 thousand from the viewpoints of wear resistance, grip performance, and the like. Meanwhile, the Mw is preferably not greater than 2 million and more preferably not greater than 1 million from the viewpoints of crosslinking uniformity and the like. The Mw can be obtained by converting, based on polystyrene standard, a value measured by gel permeation chromatography (GPC) (GPC-8000 series manufactured by Tosoh Corporation, detector: differential refractometer, column: TSKGEL SUPERMALTPORE HZ-M manufactured by Tosoh Corporation).

(SBR)

The SBR is not particularly limited, and examples thereof include solution-polymerized SBRs (S-SBRs), emulsion-polymerized SBRs (E-SBRs), and modified SBRs thereof (modified S-SBRs and modified E-SBRs). Examples of the modified SBRs include an SBR in which the ends and/or the main chain thereof is modified, and a modified SBR (a condensate, one having a branch structure, etc.) coupled with tin, a silicon compound, or the like. Among these SBRs, S-SBRs are preferable.

Examples of the S-SBR that can be used in the present embodiment include S-SBRs manufactured by and available from JSR Corporation, Sumitomo Chemical Co., Ltd., Ube Industries, Ltd., Asahi Kasei Corporation, Zeon Corporation, etc.

The styrene content of the SBR is preferably not less than 5% by mass, more preferably not less than 7% by mass, and further preferably not less than 10% by mass for the reason that the aforementioned advantageous effects of the present invention are sufficiently obtained. Meanwhile, the styrene content is preferably not greater than 25% by mass, more preferably not greater than 20% by mass, and further preferably not greater than 15% by mass. If the styrene content is greater than 25% by mass, heat generation properties tend to increase. The styrene content of the SBR in the present specification is calculated through $H^1$-NMR measurement.

The vinyl content of the SBR is preferably not less than 10% by mol, more preferably not less than 15% by mol, and further preferably not less than 20% by mol. If the vinyl content is less than 10% by mol, the grip performance tends to decrease. Meanwhile, the vinyl content is preferably not greater than 45% by mol, more preferably not greater than 42% by mol, and further preferably not greater than 40% by mol. If the vinyl content is greater than 45% by mol, the heat generation properties tend to increase. The vinyl content of the SBR in the present specification refers to the 1,2-bond unit content of the butadiene moiety of the SBR, and is measured through infrared absorption spectrometry.

The weight-average molecular weight (Mw) of the SBR is preferably not less than 200 thousand, more preferably not less than 300 thousand, further preferably not less than 400 thousand, and particularly preferably not less than 500 thousand from the viewpoints of wear resistance, grip performance, and the like. Meanwhile, the Mw is preferably not greater than 2 million and more preferably not greater than 1 million from the viewpoints of crosslinking uniformity and the like. The Mw can be obtained by converting, based on polystyrene standard, a value measured by gel permeation chromatography (GPC) (GPC-8000 series manufactured by Tosoh Corporation, detector: differential refractometer, column: TSKGEL SUPERMALTPORE HZ-M manufactured by Tosoh Corporation).

The amount of the SBR contained in the rubber component is not less than 20% by mass, preferably not less than 22% by mass, and more preferably not less than 25% by mass. If the amount is less than 20% by mass, the aforementioned advantageous effects of the present invention tend to be insufficient. Meanwhile, the amount of the SBR contained is not greater than 55% by mass, preferably not greater than 53% by mass, and more preferably not greater than 50% by mass. If the amount is greater than 55% by mass, the heat generation properties tend to increase.

(Other Rubber Components)

As the rubber component according to the present embodiment, rubber components other than the isoprene-based rubber, the SBR, and the BR may be contained. As the other rubber components, crosslinkable rubber components that are generally used in the rubber industry can be used, and examples of such rubber components include styrene-isoprene-butadiene copolymer rubber (SIBR), styrene-isobutylene-styrene block copolymers (SIBS), chloroprene rubber (CR), acrylonitrile-butadiene rubber (NBR), hydrogenated nitrile rubber (HNBR), isobutylene-isoprene rubber (IIR), ethylene-propylene rubber, polynorbornene rubber, silicone rubber, chlorinated polyethylene rubber, fluororubber (FKM), acrylic rubber (ACM), and hydrin rubber. The other rubber components may be used singly, or two or more of the other rubber components may be used in combination.

The complex elastic modulus of the tread rubber composition according to the present embodiment under the conditions of a temperature of 70°C, an initial strain of 10%, a dynamic strain of 2%, and a frequency of 10 Hz (E* at 70°C), is preferably not less than 6.2 MPa, more preferably not less than 7.0 MPa, further preferably not less than 7.5 MPa, and particularly preferably not less than 8.0 MPa from the viewpoints of wear resistance and chipping resistance.

The tanδ of the tread rubber composition according to the present embodiment under the conditions of a temperature of 70°C, an initial strain of 10%, a dynamic strain of 2%, and a frequency of 10 Hz (tanδ at 70°C), is preferably not greater than 0.13, more preferably not greater than 0.11, and further preferably not greater than 0.09. If the tanδ is greater than 0.13, the wear resistance tends to deteriorate by the tread being softened owing to heat generation.

<Carbon Black>

The rubber composition for the tire according to the present embodiment is characterized by containing a predetermined amount of small carbon black particles having a nitrogen adsorption specific surface area not less than

$130 \ m^2/g$. The small carbon black particles are dispersed to near the boundaries of the respective phases of the isoprene-based rubber, the BR, and the SBR so that the contact between the SBR and the carbon black increases. Accordingly, bonds between the respective phases become strong, and thus it is possible to obtain a rubber composition that allows more effective absorption of an impact that occurs during running on a bad road surface. In addition, it is considered that use of the small carbon black particles allows improvement in the reinforcing effect for the rubber composition, thereby improving wear resistance and chipping resistance.

The nitrogen adsorption specific surface area ($N_2SA$) of the small carbon black particles is not less than 135 $m^2/g$, and more preferably not less than 140 $m^2/g$. If the nitrogen adsorption specific surface area is less than 130 $m^2/g$, the wear resistance tends to be insufficient. Meanwhile, although the upper limit for the nitrogen adsorption specific surface area is not particularly limited, the nitrogen adsorption specific surface area is preferably not greater than 180 $m^2/g$, more preferably not greater than 160 $m^2/g$, and further preferably not greater than 150 $m^2/g$ from the viewpoint of processability. The nitrogen adsorption specific surface area can be measured according to JIS K 6217-2 "Carbon black for rubber industry - Fundamental characteristics - Part 2: Determination of specific surface area - Nitrogen adsorption methods - Single-point procedures".

The amount of the small carbon black particles contained per 100 parts by mass of the rubber component is not less than 10 parts by mass, preferably greater than 20 parts by mass, more preferably greater than 30 parts by mass, and further preferably greater than 35 parts by mass. If the amount is less than 10 parts by mass, the wear resistance tends to be insufficient. Meanwhile, the amount of the carbon black contained is not greater than 70 parts by mass, preferably not greater than 65 parts by mass, and more preferably not less than 60 parts by mass. If the amount is greater than 70 parts by mass, heat generation tends to be facilitated.

The rubber composition for the tire according to the present embodiment preferably does not contain, as the carbon black, any carbon black having a nitrogen adsorption specific surface area ($N_2SA$) less than 130 $m^2/g$. In a case where a carbon black having a nitrogen adsorption specific surface area less than 130 $m^2/g$ is contained, the amount of such a carbon black contained per 100 parts by mass of the rubber component is preferably not greater than 30 parts by mass, more preferably not greater than 20 parts by mass, and further preferably not greater than 10 parts by mass from the viewpoint of reinforcement performance.

<Other Components>

Besides the aforementioned components, the tread rubber composition according to the present embodiment may contain, as appropriate, blending ingredients that are generally used for manufacturing rubber compositions. Examples of such blending ingredients include fillers other than the carbon black (other fillers), zinc oxide, stearic acid, antioxidants, processing aids, wax, softeners, vulcanizing agents, and vulcanization accelerators.

The other fillers are not particularly limited, and examples thereof include silica, aluminum hydroxide, alumina (aluminum oxide), calcium carbonate, and talc. These fillers may be used singly, or two or more of these fillers may be used in combination.

The silica is not particularly limited, and examples thereof include dry-process silica (silicic anhydride) and wet-process silica (hydrous silicic acid), and wet-process silica is preferable because of a higher silanol group content thereof.

The nitrogen adsorption specific surface area ($N_2SA$) of the silica is preferably not less than 80 $m^2/g$ and more preferably not less than 100 $m^2/g$ from the viewpoints of durability and elongation at break. Meanwhile, the nitrogen adsorption specific surface area of the silica is preferably not greater than 250 $m^2/g$ and more preferably not greater than 220 $m^2/g$ from the viewpoints of low fuel consumption performance and processability. The nitrogen adsorption specific surface area of the silica in the present specification is a value measured according to ASTM D3037-93.

In a case where a silica is contained, the amount of the silica contained per 100 parts by mass of the rubber component is preferably not less than 1 part by mass and more preferably not less than 3 parts by mass from the viewpoints of durability and elongation at break. Meanwhile, the amount of the silica contained is preferably not greater than 10 parts by mass, more preferably not greater than 8 parts by mass, and further preferably not greater than 6 parts by mass from the viewpoint of wear resistance. The amount of the silica contained may be 0 parts by mass.

The silica is preferably used in combination with a silane coupling agent. As the silane coupling agent, any silane coupling agents that have been conventionally used in combination with silica in the rubber industry can be used. Examples of such silane coupling agents include: sulfide-based silane coupling agents such as bis(3-triethoxysilylpropyl)disulfide and bis(3-triethoxysilylpropyl)tetrasulfide; mercapto-based silane coupling agents (silane coupling agents having a mercapto group) such as 3-mercaptopropyltrimethoxysilane, and NXT-Z100, NXT-Z45, and NXT manufactured by Momentive; vinyl-based silane coupling agents such as vinyltriethoxysilane; amino-based silane coupling agents such as 3-aminopropyltriethoxysilane; glycidoxy-based silane coupling agents such as γ-glycidoxypropyltriethoxysilane; nitro-based silane coupling agents such as 3-nitropropyltrimethoxysilane; and chloro-based silane coupling agents such as 3-chloropropyltrimethoxysilane. These silane coupling agents may be used singly, or two or more of these silane coupling agents may be used in combination.

In a case where a silane coupling agent is contained, the amount of the silane coupling agent contained per 100 parts by mass of the silica is preferably not less than 1 part by mass and more preferably not less than 3 parts by mass for the reason that effects of improvement of filler dispersibility, reduction of viscosity, and the like are sufficiently obtained. Meanwhile, the amount of the silane coupling agent contained is preferably not greater than 12 parts by mass and more preferably not greater than 10 parts by mass for the reason that, otherwise, a coupling effect and a silica-dispersing effect are not sufficiently obtained, resulting in reduction in reinforcement performance.

The antioxidant is not particularly limited, and antioxidants that are used in the field of rubbers can be used. Examples of such antioxidants include quinoline-based antioxidants, quinone-based antioxidants, phenol-based antioxidants, and phenylenediamine-based antioxidants.

In a case where an antioxidant is contained, the amount of the antioxidant contained per 100 parts by mass of the rubber component is preferably not less than 0.5 parts by mass and more preferably not less than 0.8 parts by mass. Meanwhile, the amount of the antioxidant contained is preferably not greater than 2.0 parts by mass, more preferably not greater than 1.5 parts by mass, and further preferably not greater than 1.2 parts by mass from the viewpoints of the dispersibility of the fillers and the like, elongation at break, and the efficiency of kneading.

Examples of the processing aid include fatty acid metal salts such as zinc stearate. Specific examples of the processing aid include fatty acid soap-based processing aids such as EF44 and WB16 manufactured by Struktol. The blending proportion of the processing aid per 100 parts by mass of the entire rubber component is preferably not less than 0.1 parts by mass. Meanwhile, the blending proportion is preferably not greater than 5 parts by mass and particularly preferably not greater than 3 parts by mass.

In a case where wax is contained, the amount of the wax contained per 100 parts by mass of the rubber component is preferably not less than 0.5 parts by mass and more preferably not less than 1 part by mass from the viewpoint of the weather resistance of the rubber. Meanwhile, the amount is preferably not greater than 10 parts by mass and more preferably not greater than 5 parts by mass from the viewpoint of whitening of a tire due to blooming.

In a case where stearic acid is contained, the amount of the stearic acid contained per 100 parts by mass of the rubber component is preferably not less than 0.2 parts by mass and more preferably not less than 1 part by mass from the viewpoint of a vulcanization rate. Meanwhile, the amount is preferably not greater than 10 parts by mass and more preferably not greater than 5 parts by mass from the viewpoint of processability.

If zinc oxide is contained, the amount of the zinc oxide contained per 100 parts by mass of the rubber component is preferably not less than 0.5 parts by mass and more preferably not less than 1 part by mass from the viewpoint of a vulcanization rate. Meanwhile, the amount is preferably not greater than 10 parts by mass and more preferably not greater than 5 parts by mass from the viewpoint of wear resistance.

The softener refers to a component that is soluble in acetone, and examples of the softener include oils such as process oils and vegetable fats and oils, and liquid diene-based polymers. These softeners may be used singly, or two or more of these softeners may be used in combination. Among these softeners, oils are preferable.

Examples of the oils include process oils, vegetable fats and oils, and mixtures thereof. Examples of the process oils include paraffinic process oil, naphthenic process oil, and aromatic process oil (aroma oil). Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. Among these oils, aroma oil is preferable.

The liquid diene-based polymer is not particularly limited as long as being a diene-based polymer having a weight-average molecular weight not greater than 50000. Examples of the liquid diene-based polymer include styrene-butadiene copolymers (rubbers), butadiene polymers (rubbers), isoprene polymers (rubbers), and acrylonitrile-butadiene copolymers (rubbers). Among these liquid diene-based polymers, liquid styrene-butadiene copolymers (liquid styrene-butadiene rubbers (liquid SBRs)) are preferable for the reason that excellent performance on snow and ice is obtained. Meanwhile, liquid butadiene polymers (liquid butadiene rubbers (liquid BRs)) are preferable for the reason that an effect of improving wear resistance is great.

The weight-average molecular weight (Mw) of the liquid diene-based polymer is preferably not less than 1000 and more preferably not less than 1500 for the reason that an excellent effect of improving wear resistance is obtained. Meanwhile, the Mw is preferably not greater than 50000, more preferably not greater than 20000, and further preferably not greater than 15000 from the viewpoint of performance on snow and ice. The weight-average molecular weight (Mw) in the present specification can be obtained by converting, based on polystyrene standard, a value measured by gel permeation chromatography (GPC) (GPC-8000 series manufactured by Tosoh Corporation, detector: differential refractometer, column: TSKGEL SUPERMALTPORE HZ-M manufactured by Tosoh Corporation).

The amount of the softener contained per 100 parts by mass of the rubber component is preferably not less than 1 part by mass and more preferably not less than 3 parts by mass from the viewpoint of processability. Meanwhile, the amount of the softener contained is preferably not greater than 10 parts by mass and more preferably not greater than 5 parts by mass from the viewpoints of resistance to block chipping and wear resistance.

A sulfur is suitably used as the vulcanizing agent. As the sulfur, powdery sulfur, oil-treated sulfur, precipitated sulfur, colloidal sulfur, insoluble sulfur, highly dispersible sulfur, and the like can be used.

In a case where a sulfur is contained as the vulcanizing agent, the amount of the sulfur contained per 100 parts by mass of the rubber component is preferably not less than 0.5 parts by mass and more preferably not less than 1.0 part by mass from the viewpoint of ensuring a sufficient vulcanization reaction and obtaining favorable grip performance and wear resistance. Meanwhile, the amount is preferably not greater than 3.0 parts by mass and more preferably not greater than 2.5 parts by mass from the viewpoint of degradation.

Examples of vulcanizing agents other than sulfur include: sulfur atom-containing vulcanizing agents such as TACKIROL V-200 manufactured by Taoka Chemical Co., Ltd., DURALINK HTS (1,6-hexamethylene sodium dithiosulfate dihydrate) manufactured by Flexsys, and KA9188 (1,6-bis(N,N'-dibenzylthiocarbamoyldithio)hexane) manufactured by LANXESS; and organic peroxides such as dicumyl peroxide.

Examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based and aldehyde-ammonia-based vulcanization accelerators, imidazoline-based vulcanization accelerators, and xanthate-based vulcanization accelerators. These vulcanization accelerators may be used singly, or two or more of these vulcanization accelerators may be used in combination. Among these vulcanization accelerators, sulfenamide-based vulcanization accelerators, thiazole-based vulcanization accelerators, and guanidine-based vulcanization accelerators are preferable, and sulfenamide-based vulcanization accelerators are more preferable.

Examples of the sulfenamide-based vulcanization accelerators include N-tert-butyl-2-benzothiazolyl sulfenamide (TBBS), N-cyclohexyl-2-benzothiazolyl sulfenamide (CBS), and N,N-dicyclohexyl-2-benzothiazolyl sulfenamide (DCBS). Among these sulfenamide-based vulcanization accelerators, N-tert-butyl-2-benzothiazolyl sulfenamide (TBBS) and N-cyclohexyl-2-benzothiazolyl sulfenamide (CBS) are preferable.

Examples of the thiazole-based vulcanization accelerators include 2-mercaptobenzothiazole, the cyclohexylamine salt of 2-mercaptobenzothiazole, and di-2-benzothiazolyldisulfide. Among these thiazole-based vulcanization accelerators, 2-mercaptobenzothiazole is preferable.

Examples of the guanidine-based vulcanization accelerators include 1,3-diphenylguanidine, 1,3-di-o-tolylguanidine, 1-o-tolylbiguanide, the di-o-tolylguanidine salt of dicatechol borate, 1,3-di-o-cumenylguanidine, 1,3-di-o-biphenylguanidine, and 1,3-di-o-cumenyl-2-propionylguanidine. Among these guanidine-based vulcanization accelerators, 1,3-diphenylguanidine is preferable.

In a case where a vulcanization accelerator is contained, the amount of the vulcanization accelerator contained per 100 parts by mass of the rubber component is preferably not less than 0.5 parts by mass and more preferably not less than 1.0 part by mass from the viewpoint of ensuring a sufficient vulcanization rate. Meanwhile, the amount of the vulcanization accelerator contained is preferably not greater than 10 parts by mass and more preferably not greater than 5 parts by mass from the viewpoint of inhibiting blooming.

<Production of Rubber Composition and Tire>

The tread rubber composition according to the present embodiment can be produced by a general method. For example, the tread rubber composition can be produced by a method in which the components other than a crosslinking agent and the vulcanization accelerator among the aforementioned components are kneaded with a known kneading machine generally used in the rubber industry such as a Banbury mixer, a kneader, or an open roll, the crosslinking agent and the vulcanization accelerator are then added to the kneaded product, the mixture is further kneaded, and thereafter, vulcanization is performed.

The tire according to the present embodiment can be produced by an ordinary method using the above-described tread rubber composition. Specifically, an unvulcanized rubber composition obtained by kneading the aforementioned components is extruded into the shape of a tire member such as a tread, the member is attached on a tire shaping machine together with other tire members, and these members are shaped by an ordinary method, to form an unvulcanized tire. Then, the unvulcanized tire is heated and pressurized in a vulcanizing machine, whereby the tire can be produced.

The tire according to the present embodiment is not particularly limited in category, and can be used as a tire for passenger cars, a tire for heavy-load vehicles such as trucks and buses, a tire for two-wheeled automotive vehicles, a run-flat tire, a non-pneumatic tire, and the like. However, the tire is preferably used as a tire for heavy-load vehicles and more preferably used as a steer tire (forefront tire) for trucks. In addition, since the tire according to the present embodiment has excellent wear resistance and chipping resistance, the tire is suitable for running on a bad road surface (unpaved rough road surface).

EXAMPLES

The present invention will be specifically described by means of examples, but the present invention is not limited to these examples.

Various chemicals used in examples and comparative examples will be described.

NR: TSR20

SBR 1: non-oil-extended solution-polymerized SBR (Mw: 500 thousand, styrene content: 10% by mass, vinyl content: 40% by mol, cis-trans ratio=0.68)

SBR 2: non-oil-extended solution-polymerized SBR (Mw: 710 thousand, styrene content: 23.5% by mass, vinyl content: 20% by mol, cis-trans ratio=0.50)

BR: UBEPOL BR150B (Mw: 440 thousand, high-cis BR, cis-1,4 bond content: 96%) manufactured by Ube Industries, Ltd.

Carbon black 1: N134 ($N_2SA$: 143 $m^2$/g) manufactured by Cabot Japan K.K.

Carbon black 2: SHOBLACK N220 ($N_2SA$: 114 $m^2$/g) manufactured by Cabot Japan K.K.

Silica: ULTRASIL VN3 ($N_2SA$: 175 $m^2$/g, average primary particle diameter: 15 nm) manufactured by Evonik Degussa GmbH

Wax: OZOACE 355 manufactured by NIPPON SEIRO CO., LTD.

Antioxidant 1: NOCRAC 6C (N-(1,3-dimethylbutyl)-N-phenyl-p-phenylenediamine, 6PPD) manufactured by OUCHI SHINKO CHEMICAL INDUSTRIAL CO., LTD.

Antioxidant 2: NOCRAC RD (poly(2,2,4-trimethyl-1,2-dihydroquinoline)) manufactured by OUCHI SHINKO CHEMICAL INDUSTRIAL CO., LTD.

Stearic acid: bead stearic acid "Tsubaki" manufactured by NOF CORPORATION

Zinc oxide: Zinc Oxide II manufactured by MITSUI MINING & SMELTING CO., LTD.

Sulfur: powdery sulfur manufactured by Tsurumi Chemical Industry Co., Ltd.

Vulcanization accelerator: NOCCELER NS (N-tert-butyl-2-benzothiazolyl sulfenamide (TBBS)) manufactured by OUCHI SHINKO CHEMICAL INDUSTRIAL CO., LTD.

Examples and Comparative Examples

According to each blending formula in Table 1, the chemicals other than the sulfur and the vulcanization accelerator were kneaded for five minutes using a 1.7-L closed-type Banbury mixer until the discharge temperature became 170°C, thereby obtaining a kneaded product. Moreover, the obtained kneaded product was kneaded again for four minutes using the Banbury mixer at a discharge temperature of 150°C (re-milling). Then, the sulfur and the vulcanization accelerator were added to the obtained kneaded product, and the mixture was kneaded for four minutes using a twin-screw open roll until the temperature became 105°C, thereby obtaining an unvulcanized rubber composition. The obtained unvulcanized rubber composition was press-vulcanized for 12 minutes at 170°C, thereby producing a test rubber composition.

In addition, the unvulcanized rubber composition was extruded into the shape of the tread of a tire using an extruder provided with a die having a predetermined shape, and was attached together with other tire members, and an unvulcanized tire was formed. The unvulcanized tire was press-vulcanized to produce a test tire (12R22.5, a tire for trucks and buses). The indexes (SL0/SL70 and SL70/SL97) of the ground-contact surface shape of the tire were set to the values indicated in Table 1 by adjusting the thicknesses of a center portion of the tread and/or shoulder portions of the tread and adjusting the gauge distribution of the tread.

Each of the obtained vulcanized rubber compositions and test tires was evaluated as follows. The results of the evaluation are indicated in Table 1.

<Viscoelasticity Test>

Under the conditions of a temperature of 70°C, an initial strain of 10%, a dynamic strain of 2%, and a frequency of 10 Hz, respective types of vulcanized rubber compositions were measured for complex elastic modulus (E* at 70°C) and tan$\delta$ (tan$\delta$ at 70°C) using a viscoelasticity spectrometer VES manufactured by Iwamoto Seisakusho.

<Wear Resistance during Running on Bad Road>

Respective types of test tires were mounted to all wheels of a truck (two-wheel-drive vehicle) loaded to the maximum load capacity of 10 tons. The truck was caused to run for 30000 km on an unpaved bad road scattered with sand and stones and having a highly uneven surface. Thereafter, the groove depth of a tread portion of each tire was measured, and the running distance at which the groove depth of the tire decreased by 1 mm was obtained. The results are indicated as indexes, with the values of reference comparative examples (Comparative Example 6 in Table 1 and Comparative Example 8 in Table 2) being regarded as 100. A larger index indicates better wear resistance. The indexes were obtained with the following expression.

(Wear resistance index) = (running distance at which tire groove in each blending example decreased by 1 mm)/(running distance at which tire groove in reference comparative example decreased by 1 mm)×100

<Elongation at Break>

No. 3 dumbbell test pieces were prepared from respective types of vulcanized rubber compositions and subjected to tensile tests according to JIS K 6251. The elongation at break (EB) of each test piece was measured, and the results are indicated as indexes, with the values of the reference comparative examples (Comparative Example 6 in Table 1 and Comparative Example 8 in Table 2) being regarded as 100. A larger EB index indicates that the chipping resistance of the rubber composition is better.

<Uneven Wear Resistance>

Respective types of test tires were mounted to all wheels of the truck (two-wheel-drive vehicle) loaded to the maximum load capacity of 10 tons. The truck was caused to run for 60000 km on a test course with a dry asphalt road surface. Thereafter, each of center blocks, middle blocks, and shoulder blocks of the rear wheels was measured for difference in wear amount between both sides of the block in the tire circumferential direction. For each of the block types, the measurement was performed on eight blocks arranged substantially at equal pitches in the tire circumferential direction, and the average value of all the measurement values was obtained. The results are indicated as indexes, with the values of the reference comparative examples (Comparative Example 6 in Table 1 and Comparative Example 8 in Table 2) being regarded as 100. A larger index indicates better uneven wear resistance. The indexes were obtained with the following expression.

(Uneven wear resistance index) = (difference in wear amount in reference comparative example)/(difference in wear amount in each blending example)×100

A value not less than 105 is defined as a performance target value for the average value between the wear resistance index and the uneven wear resistance index, and a value not less than 102 is defined as a performance target value for the average value among the wear resistance index, the EB index, and the uneven wear resistance index.

[Table 1]

| | | Example | | | | | | | | Comparative Example | | | | | | |
|---|---|---|---|---|---|---|---|---|---|---|---|---|---|---|---|---|
| | | 1 | 2 | 3 | 4 | 5 | 6 | 7 | 8 | 1 | 2 | 3 | 4 | 5 | 6 | 7 |
| Blended amount (parts by mass) | NR | 60 | 60 | 60 | 60 | 50 | 40 | 40 | 30 | 60 | 20 | 60 | 60 | 30 | 60 | 20 |
| | SBR 1 | 25 | 40 | 25 | - | 30 | 40 | - | 50 | 25 | 60 | 25 | - | 50 | 25 | 60 |
| | SBR 2 | - | - | - | 25 | - | - | 40 | - | - | - | - | 25 | - | - | - |
| | BR | 15 | - | 15 | 15 | 20 | 20 | 20 | 20 | 15 | 20 | 15 | 15 | 20 | 15 | 20 |
| | Carbon black 1 | 50 | 50 | 50 | 50 | 50 | 50 | 50 | 50 | - | 50 | 50 | 50 | 50 | - | 50 |
| | Carbon black 2 | - | - | - | - | - | - | - | - | 54 | - | - | - | - | 54 | - |
| | Silica | - | - | 8.0 | - | - | - | - | - | 8.0 | - | - | - | - | 8.0 | - |
| | Wax | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Antioxidant 1 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Antioxidant 2 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Stearic acid | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Zinc oxide | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 |
| | Sulfur | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Vulcanization accelerator | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | SL0/SL70 | 1.11 | 1.08 | 1.12 | 1.10 | 1.09 | 1.10 | 1.11 | 1.08 | 1.20 | 1.07 | 1.10 | 1.02 | 1.04 | 1.11 | 1.11 |
| | SL70/SL97 | 1.00 | 0.99 | 1.01 | 1.02 | 1.01 | 0.98 | 0.99 | 1.02 | 1.08 | 1.07 | 1.14 | 1.12 | 1.13 | 1.00 | 1.00 |
| Evaluation | E* at 70°C | 6.5 | 6.2 | 7.5 | 6.0 | 6.8 | 8.1 | 8.3 | 9.8 | 8.0 | 10.4 | 6.5 | 6.0 | 9.8 | 8.0 | 10.4 |
| | Tanδ at 70°C | 0.10 | 0.13 | 0.10 | 0.13 | 0.10 | 0.09 | 0.10 | 0.08 | 0.09 | 0.07 | 0.10 | 0.13 | 0.08 | 0.09 | 0.07 |
| | Wear resistance index | 111 | 106 | 113 | 109 | 110 | 109 | 110 | 106 | 100 | 95 | 111 | 108 | 106 | 100 | 95 |
| | EB index | 111 | 111 | 117 | 111 | 110 | 108 | 109 | 105 | 100 | 93 | 111 | 111 | 105 | 100 | 93 |
| | Uneven wear resistance index | 110 | 107 | 109 | 114 | 108 | 107 | 108 | 106 | 95 | 93 | 81 | 84 | 82 | 100 | 98 |

[Table 2]

| | | Example | | | | | | | | Comparative Example | | | | | |
|---|---|---|---|---|---|---|---|---|---|---|---|---|---|---|---|
| | | 9 | 10 | 11 | 12 | 13 | 14 | 15 | 16 | 8 | 9 | 10 | 11 | 12 | 13 |
| Blended amount ( parts by mass) | NR | 50 | 50 | 50 | 50 | 60 | 60 | 30 | 30 | 50 | 50 | 60 | 60 | 30 | 30 |
| | SBR 1 | 30 | 30 | 30 | 30 | - | - | 50 | 50 | 30 | 30 | - | - | 50 | 50 |
| | SBR 2 | - | - | - | - | 25 | 25 | - | - | - | - | 25 | 25 | - | - |
| | BR | 20 | 20 | 20 | 20 | 15 | 15 | 20 | 20 | 20 | 20 | 15 | 15 | 20 | 20 |
| | Carbon black 1 | 50 | 50 | 50 | 50 | 50 | 50 | 50 | 50 | 50 | 50 | 50 | 50 | 50 | 50 |
| | Carbon black 2 | - | - | - | - | - | - | - | - | - | - | - | - | - | - |
| | Silica | - | - | - | - | - | - | - | - | - | - | - | - | - | - |
| | Wax | 1.0 | 1.0 | 1.0 | 1.0 | 1.0 | 1.0 | 1.0 | 1.0 | 1.0 | 1.0 | 1.0 | 1.0 | 1.0 | 1.0 |
| | Antioxidant 1 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Antioxidant 2 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Stearic acid | 3.0 | 3.0 | 3.0 | 3.0 | 3.0 | 3.0 | 3.0 | 3.0 | 3.0 | 3.0 | 3.0 | 3.0 | 3.0 | 3.0 |
| | Zinc oxide | 3.5 | 3.5 | 3.5 | 3.5 | 3.5 | 3.5 | 3.5 | 3.5 | 3.5 | 3.5 | 3.5 | 3.5 | 3.5 | 3.5 |
| | Sulfur | 2.0 | 2.0 | 2.0 | 2.0 | 2.0 | 2.0 | 2.0 | 2.0 | 2.0 | 2.0 | 2.0 | 2.0 | 2.0 | 2.0 |
| | Vulcanization accelerator | 2.0 | 2.0 | 2.0 | 2.0 | 2.0 | 2.0 | 2.0 | 2.0 | 2.0 | 2.0 | 2.0 | 2.0 | 2.0 | 2.0 |
| | SL0/SL70 | 1.05 | 1.15 | 1.14 | 1.09 | 1.10 | 1.05 | 1.10 | 1.06 | 1.20 | 1.10 | 1.12 | 1.19 | 1.11 | 1.20 |
| | SL70/SL97 | 0.95 | 1.05 | 1.10 | 0.95 | 1.01 | 0.95 | 1.00 | 0.95 | 1.01 | 1.09 | 0.93 | 0.94 | 0.93 | 0.94 |
| Evaluation | E* at 70°C | 6.8 | 6.8 | 6.8 | 6.8 | 6.0 | 6.0 | 9.8 | 9.8 | 6.8 | 6.8 | 6.0 | 6.0 | 6.8 | 6.8 |
| | Tanδ at 70°C | 0.10 | 0.10 | 0.10 | 0.10 | 0.13 | 0.13 | 0.08 | 0.08 | 0.10 | 0.10 | 0.13 | 0.13 | 0.10 | 0.10 |
| | Wear resistance index | 105 | 105 | 105 | 105 | 105 | 104 | 102 | 101 | 100 | 103 | 101 | 99 | 99 | 97 |
| | EB index | 100 | 100 | 100 | 100 | 101 | 101 | 95 | 95 | 100 | 100 | 101 | 101 | 95 | 95 |
| | Uneven wear resistance index | 122 | 122 | 128 | 128 | 131 | 117 | 129 | 117 | 100 | 94 | 98 | 100 | 99 | 100 |

From the results in Table 1 and Table 2, it has been confirmed that the combined performance of the wear resistance, the uneven wear resistance, and the chipping resistance of each heavy-duty tire according to the present invention is improved. The heavy-duty tire contains predetermined amounts of the isoprene-based rubber, the butadiene rubber, the styrene-butadiene rubber, and the carbon black having a predetermined nitrogen adsorption specific surface area, and the ground-contact surface shape of the tire satisfies the predetermined requirements.

**Claims**

1. A heavy-duty tire comprising a tread formed from a rubber composition containing a rubber component that includes 25 to 70% by mass of an isoprene-based rubber, 10 to 30% by mass of a butadiene rubber, and 20 to 55% by mass of a styrene-butadiene rubber, the rubber composition further containing, per 100 parts by mass of the rubber component, 10 to 70 parts by mass of a carbon black having a nitrogen adsorption specific surface area not less than 135 $m^2/g$, wherein

   a ground-contact surface shape formed when the tread is pressed against a flat surface by application of a normal load in a normal state where the heavy-duty tire is mounted to a normal rim and inflated to a normal internal pressure and no load is applied to the heavy-duty tire, satisfies formulae (1) and (2):

   $$1.05 \leq SL0/SL70 \leq 1.15 \qquad (1)$$

   $$0.95 \leq SL70/SL97 \leq 1.05 \qquad (2),$$

   where
   SL0 represents a ground-contact length in a tire circumferential direction on a tire equator, SL70 represents a ground-contact length in the tire circumferential direction at a position that is apart from the tire equator in a tire axial direction by a distance that is 70% of a half ground-contact width of the tread, and SL97 represents a ground-contact length in the tire circumferential direction at a position that is apart from the tire equator in the tire axial direction by a distance that is 97% of the half ground-contact width of the tread,
   wherein the "normal rim" refers to a rim defined, in a standard system including a standard on which the tire is based, by the standard for each tire, and is the standard rim in the JATMA standard, the "Design Rim" in the TRA standard, or the "Measuring Rim" in the ETRTO standard,
   wherein the "normal internal pressure" refers to an air pressure defined by the aforementioned standard for each tire, and is the maximum air pressure in the JATMA standard, the maximum value indicated in the table "TIRE LOAD LIMITS AT VARIOUS COLD INFLATION PRESSURES" in the TRA standard, or the "INFLATION PRESSURE" in the ETRTO standard, and
   wherein the "normal load" refers to a load defined by the aforementioned standard for each tire, and is the maximum load capacity in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

2. The heavy-duty tire according to claim 1, wherein the rubber composition has a complex elastic modulus E* at 70°C not less than 6.2.

3. The heavy-duty tire according to claim 1 or 2, wherein the rubber composition has a tan$\delta$ at 70°C not greater than 0.13.

4. The heavy-duty tire according to any one of claims 1 to 3, wherein an amount of a silica contained in the rubber composition per 100 parts by mass of the rubber component is not less than 0 parts by mass and not greater than 10 parts by mass.

5. The heavy-duty tire according to any one of claims 1 to 4, wherein the styrene-butadiene rubber has a styrene content of 5 to 25% by mass, a vinyl content of 10 to 45% by mol, and a weight-average molecular weight not less than 200 thousand.

6. The heavy-duty tire according to any one of claims 1 to 5, wherein the butadiene rubber has a cis content not less than 90% and a weight-average molecular weight not less than 400 thousand.

**Patentansprüche**

1. Schwerlastreifen, umfassend einen Laufstreifen, der mit einer Kautschukzusammensetzung gebildet ist, die eine Kautschukkomponente enthält, welche 25 bis 70 Massen-% eines Isopren-basierten Kautschuks, 10 bis 30 Massen-% eines Butadienkautschuks und 20 bis 55 Massen-% eines Styrol-Butadien-Kautschuks umfasst, wobei die Kautschukzusammensetzung zudem, pro 100 Massenteile der Kautschukkomponente, 10 bis 70 Massenteile eines Rußes enthält, der eine spezifische Stickstoffadsorptionsoberfläche von nicht weniger als 135 $m^2/g$ aufweist, wobei

   eine Bodenkontaktoberflächenform, die gebildet wird, wenn der Laufstreifen durch Aufbringen einer normalen Last in einem normalen Zustand, worin der Schwerlastreifen auf eine normale Felge montiert ist und auf einen normalen Innendruck aufgepumpt ist und keine Last auf den Schwerlastreifen aufgebracht ist, gegen eine ebene Oberfläche gedrückt wird, den Formeln (1) und (2) genügt:

   $$1{,}05 \leq SL0/SL70 \leq 1{,}15 \qquad (1)$$

   $$0{,}95 \leq SL70/SL97 \leq 1{,}05 \qquad (2),$$

   worin
   SL0 eine Bodenkontaktlänge in einer Reifenumfangsrichtung auf einem Reifenäquator darstellt, SL70 eine Bodenkontaktlänge in der Reifenumfangsrichtung an einer Position darstellt, die von dem Reifenäquator in einer Reifenaxialrichtung durch einen Abstand getrennt ist, der 70% einer halben Bodenkontaktbreite des Laufstreifens beträgt, und SL97 eine Bodenkontaktlänge in der Reifenumfangsrichtung an einer Position darstellt, die von dem Reifenäquator in der Reifenaxialrichtung durch einen Abstand getrennt ist, der 97% der halben Bodenkontaktbreite des Laufstreifens beträgt,
   wobei die "normale Felge" eine Felge bezeichnet, die, in einem Normsystem, das eine Norm umfasst, auf welcher der Reifen basiert, durch die Norm für jeden Reifen definiert ist, und die Normfelge in der JATMA-Norm, die "Design Rim" in der TRA-Norm oder die "Measuring Rim" in der ETRTO-Norm ist,
   wobei der "normale Innendruck" einen Luftdruck bezeichnet, der durch die besagte Norm für jeden Reifen definiert ist, und der maximale Luftdruck in der JATMA-Norm, der in der Tabelle "TIRE LOAD LIMITS AT VARIOUS COLD INFLATION PRESSURES" in der TRA-Norm angegebene Maximalwert oder der "INFLATION PRESSURE" in der ETRTO-Norm ist, und
   wobei die "normale Last" eine Last bezeichnet, die durch die besagte Norm für jeden Reifen definiert ist, und die maximale Tragfähigkeit in der JATMA-Norm, der in der Tabelle "TIRE LOAD LIMITS AT VARIOUS COLD INFLATION PRESSURES" in der TRA-Norm angegebene Maximalwert oder die "LOAD CAPACITY" in der ETRTO-Norm ist.

2. Schwerlastreifen nach Anspruch 1, wobei die Kautschukzusammensetzung einen komplexen Elastizitätsmodul E* bei 70°C von nicht weniger als 6,2 aufweist.

3. Schwerlastreifen nach Anspruch 1 oder 2, wobei die Kautschukzusammensetzung einen tan $\delta$ bei 70°C von nicht größer als 0,13 aufweist.

4. Schwerlastreifen nach einem der Ansprüche 1 bis 3, wobei eine Menge eines in der Kautschukzusammensetzung enthaltenen Siliciumdioxids pro 100 Massenteile der Kautschukkomponente nicht kleiner als 0 Massenteile und nicht größer als 10 Massenteile ist.

5. Schwerlastreifen nach einem der Ansprüche 1 bis 4, wobei der Styrol-Butadien-Kautschuk einen Styrolgehalt von 5 bis 25 Massen-%, einen Vinylgehalt von 10 bis 45 Mol-% und ein gewichtsmittleres Molekulargewicht von nicht weniger als zweihunderttausend aufweist.

6. Schwerlastreifen nach einem der Ansprüche 1 bis 5, wobei der Butadienkautschuk einen cis-Gehalt von nicht weniger als 90% und ein gewichtsmittleres Molekulargewicht von nicht weniger als vierhunderttausend aufweist.

**Revendications**

1. Pneumatique pour poids-lourds comprenant une bande de roulement formée d'une composition de caoutchouc qui contient un composant de caoutchouc qui comprend 25 à 70 % en masse d'un caoutchouc à base d'isoprène, 10 à 30 % en masse d'un caoutchouc de butadiène et 20 à 55 % en masse d'un caoutchouc de styrène-butadiène, la composition de caoutchouc contenant en outre, par 100 parties en masse du composant de caoutchouc, 10 à 70 parties en masse d'un noir de charbon ayant une surface spécifique d'adsorption d'azote de pas moins de 135 m$^2$/g,

   dans lequel une forme de surface de contact avec le sol formée lorsque la bande de roulement est pressée contre une surface plate par application d'une charge normale dans un état normal où le pneumatique pour poids-lourds est monté sur une jante normale et gonflé à une pression interne normale et aucune charge n'étant appliquée au pneumatique pour poids-lourds, satisfait les formules (1) et (2) :

$$1,05 \leq SL0/SL70 \leq 1,15 \qquad (1)$$

$$0,95 \leq SL70/SL97 \leq 1,05 \qquad (2),$$

   où
   SL0 représente une longueur de contact avec le sol dans une direction circonférentielle de pneumatique sur un équateur de pneumatique, SL70 représente une longueur de contact avec le sol dans la direction circonférentielle de pneumatique à une position qui est séparée de l'équateur de pneumatique dans une direction axiale de pneumatique par une distance qui est 70 % d'une demi-largeur de contact avec le sol de la bande de roulement et SL97 représente une longueur de contact avec le sol dans la direction circonférentielle de pneumatique à une position qui est séparée de l'équateur de pneumatique dans la direction axiale de pneumatique par une distance qui est 97 % de la demi-largeur de contact avec le sol de la bande de roulement,
   dans lequel la « jante normale » se rapporte à une jante définie, dans un système standard comprenant un standard sur lequel le pneumatique est basé, par le standard pour chaque pneumatique et est la jante standard dans la norme JATMA, la « jante de conception » dans la norme TRA ou la « jante de mesure » dans la norme ETRTO,
   dans lequel la « pression interne normale » se rapporte à une pression d'air définie par le standard mentionné ci-dessus pour chaque pneumatique et est la pression d'air maximum dans la norme JATMA, la valeur maximum indiquée dans le tableau « LIMITES DE CHARGE DE PNEUMATIQUE A DIVERSES PRESSIONS DE GONFLEMENT FROIDES » dans la norme TRA ou la « PRESSION DE GONFLEMENT » dans la norme ETRTO, et dans lequel la « charge normale » se rapporte à une charge définie par le standard mentionné ci-dessus pour chaque pneumatique et est la capacité de charge maximum dans la norme JATMA, la valeur maximum indiquée dans le tableau « LIMITES DE CHARGE DE PNEUMATIQUE A DIVERSES PRESSIONS DE GONFLEMENT FROIDES » dans la norme TRA ou la « CAPACITE DE CHARGE » dans la norme ETRTO.

2. Pneumatique pour poids-lourds selon la revendication 1, dans lequel la composition de caoutchouc a un module élastique complexe E* à 70 °C de pas moins de 6,2.

3. Pneumatique pour poids-lourds selon la revendication 1 ou 2, dans lequel la composition de caoutchouc a une tanδ à 70 °C de pas plus de 0,13.

4. Pneumatique pour poids-lourds selon l'une quelconque des revendications 1 à 3, dans lequel une quantité d'une silice contenue dans la composition de caoutchouc par 100 parties en masse du composant de caoutchouc est de pas moins de 0 partie en masse et de pas plus de 10 parties en masse.

5. Pneumatique pour poids-lourds selon l'une quelconque des revendications 1 à 4, dans lequel le caoutchouc de styrène-butadiène a une teneur en styrène de 5 à 25 % en masse, une teneur en vinyle de 10 à 45 % par mole et un poids moléculaire moyen en poids de pas moins de 200 milles.

6. Pneumatique pour poids-lourds selon l'une quelconque des revendications 1 à 5, dans lequel le caoutchouc de butadiène a une teneur en cis de pas moins de 90 % et un poids moléculaire moyen en poids de pas moins de 400 milles.

[Fig. 1]

TIRE ROTATIONAL DIRECTION

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014024890 A
- WO 2018097066 A1
- EP 3546512 A1
- US 7980279 B2
- EP 2730433 A1